(19) Europäisches Patentamt
European Patent Office
Office européen des brevets

(11) EP 4 656 336 A1

(12) **EUROPEAN PATENT APPLICATION**
published in accordance with Art. 153(4) EPC

(43) Date of publication:
**03.12.2025 Bulletin 2025/49**

(21) Application number: **23918618.2**

(22) Date of filing: **19.12.2023**

(51) International Patent Classification (IPC):
***B25J 15/08** (2006.01)* ***B25J 19/00** (2006.01)*
***B25J 19/06** (2006.01)* ***C08K 3/22** (2006.01)*
***C08L 81/02** (2006.01)*

(52) Cooperative Patent Classification (CPC):
**B25J 15/08; B25J 19/00; B25J 19/06; C08K 3/22; C08L 81/02**

(86) International application number:
**PCT/JP2023/045545**

(87) International publication number:
**WO 2024/157664 (02.08.2024 Gazette 2024/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.01.2023 JP 2023008380**

(71) Applicant: **DIC Corporation**
**Tokyo 174-8520 (JP)**

(72) Inventors:
- **KURATA, Kunito**
  **Ichihara-shi, Chiba 290-8585 (JP)**
- **KUROKAWA, Ryuhei**
  **Ichihara-shi, Chiba 290-8585 (JP)**
- **TAKAHASHI, Yoshihisa**
  **Ichihara-shi, Chiba 290-8585 (JP)**
- **MORI, Kotaro**
  **Tokyo 103-8233 (JP)**

(74) Representative: **TBK**
**Bavariaring 4-6**
**80336 München (DE)**

(54) **END EFFECTOR AND ROBOT ARM**

(57) An end effector 10 according to the present disclosure is an end effector 10 for use in a robot, and includes a body part 11 containing a resin, and a circuitry part 12 including circuitry integrally formed with the resin in the body part 11 and contributing to a predetermined function.

*FIG. 10*

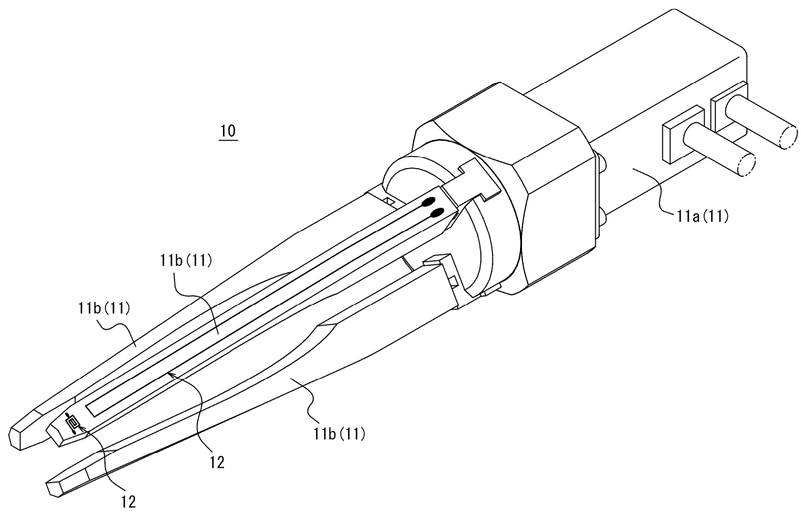




Processed by Luminess, 75001 PARIS (FR)

## Description

Technical Field

The present disclosure relates to an end effector and a robot arm. This application claims priority to Japanese Patent Application No. 2023-008380 filed in Japan on January 23, 2023, the entire disclosure of which is hereby incorporated by reference.

Background Art

Robot arms for various applications have been known, including those for industrial use in manufacturing sites, medical use, and nursing care. In addition, there are known technologies related to end effectors, including robot hands and robot grippers, which are attached to the end of a robot arm. For example, PTL 1 discloses a tactile sensor-attached finger for a robotic hand mountable on the robot hand to reduce damage and failure caused by a grip target coming in contact with a part of a finger member other than its palm surface.

Citation List

Patent Literature

PTL 1: Japanese Unexamined Patent Application Publication No. 2022-184009

Summary of Invention

Technical Problem

For such end effectors, reduction of the number of parts, downsizing, and weight reduction are required because of the payload limit of the robot arm. In addition, the end effectors are required to be waterproof and water resistant so that the end effectors can be cleaned for preventing the spread of infectious diseases and for other hygiene purposes. Generally, end effectors are made of metal, are heavy, and rust when cleaned.
End effectors typically have only a single function of gripping an object. For example, it is known to additionally impart a sensing function or the like to a part of the end effector, as in the conventional technology described in PTL 1. However, in order to do so, it is necessary to additionally arrange a sheet or film for the sensor and a substrate for forming an electric circuit.
An object of the present disclosure is to provide an end effector and a robot arm that can contribute to more functions with a simpler configuration.

Solution to Problem

The present disclosure provides

(1) an end effector for use in a robot, including:

a body part containing a resin; and
a circuitry part including circuitry integrally formed with the resin in the body part, the circuitry part contributing to a predetermined function.

(2) In the end effector according to (1),
the circuitry may have wiring formed in a predetermined pattern on a surface of the resin of the body part and contribute to the predetermined function based on the wiring itself.
(3) In the end effector according to (1),
the circuitry may have a substrate integrally molded with the resin of the body part, and wiring formed in a predetermined pattern on the substrate, and contribute to the predetermined function based on the wiring itself.
(4) In the end effector according to (2) or (3),

the function may include a first function of detecting that the body part comes into contact with a first object, and the pattern corresponding to the first function may include a first pattern including at least one straight line connecting an input electrode and an output electrode integrally formed with the resin in the body part.

(5) In the end effector according to (4),

the function may include a second function of detecting a height of a second object,
the pattern corresponding to the second function may include a second pattern including a plurality of the first patterns, and
in the second pattern, one straight line included in each of the plurality of the first patterns may be arranged along an extension direction of the body part.

(6) In the end effector according to (4) or (5),
the first pattern may include a first straight line extending from the input electrode, a second straight line bent 90° from the first straight line, and a third straight line further bent 90° from the second straight line and extending to the output electrode formed in parallel with the input electrode.
(7) In the end effector according to (4) or (5),
the first pattern may include only a fourth straight line extending from the input electrode to the output electrode.
(8) In the end effector according to any one of (2) to (7),

the function may include a third function of detecting a magnitude of pressure generated when the end effector grips a third object, and
the pattern corresponding to the third function may include a third pattern that functions as a strain gauge.

(9) In the end effector according to (8),
the third pattern may repeat folding a straight line 180° at one end and further folding the folded straight line 180° at another end.
(10) In the end effector according to any one of (2) to (9),

the function may include a fourth function of generating a magnetic field to transmit electric power to a fourth object, and
the pattern corresponding to the fourth function may include a helical fourth pattern.

(11) In the end effector according to any one of (1) to (10),
the circuitry part may have a sensor element mounted on the circuitry and contributing to the predetermined function.
(12) In the end effector according to any one of (1) to (11),
the circuitry part may have a control element mounted on the circuitry and configured to perform processing necessary to achieve the predetermined function.
(13) In the end effector according to any one of (1) to (12),
the resin may include a thermoplastic resin.
(14) In the end effector according to (13),
the thermoplastic resin may include at least one selected from the group consisting of engineering plastics and super engineering plastics.
(15) In the end effector according to (14),
the thermoplastic resin may be a polyarylene sulfide resin.
(16) In the end effector according to any one of (1) to (15),
the resin may be mixed with a metal oxide containing at least one of copper and chromium.

The present disclosure provides
(17)
a robot arm including the end effector according to any one of (1) to (16).

Advantageous Effects of Invention

The present disclosure can provide an end effector and a robot arm that can contribute to more functions with a simpler configuration.

Brief Description of Drawings

FIG. 1 is a schematic diagram illustrating the appearance of a robot arm according to one embodiment of the present

disclosure.

FIG. 2 is a schematic diagram illustrating the appearance of an end effector of the robot arm in FIG. 1.

FIG. 3 is a block diagram illustrating an overall configuration of the robot arm in FIG. 1.

FIG. 4 is a schematic diagram illustrating a first pattern of wiring of a first circuit in FIG. 2.

FIG. 5 is a schematic diagram illustrating a second pattern of wiring of a second circuit in FIG. 2.

FIG. 6A is a schematic diagram illustrating a third pattern of wiring of a third circuit in FIG. 2.

FIG. 6B is a schematic diagram of the configuration illustrated in FIG. 6A as viewed from a side direction.

FIG. 7 is a schematic diagram illustrating a fourth pattern of wiring of a fourth circuit in FIG. 2.

FIG. 8 is a schematic diagram illustrating the first pattern of wiring of the first circuit according to a modification of the present disclosure.

FIG. 9 is a schematic diagram illustrating the second pattern of wiring of the second circuit according to a modification of the present disclosure.

FIG. 10 is a schematic diagram illustrating the appearance of the end effector according to a modification of the present disclosure.

Description of Embodiments

An embodiment of the present disclosure will mainly be described below with reference to the accompanying drawings.

FIG. 1 is a schematic diagram illustrating the appearance of a robot arm 1 according to one embodiment of the present disclosure. FIG. 2 is a schematic diagram illustrating the appearance of an end effector 10 of the robot arm 1 in FIG. 1. FIG. 3 is a block diagram illustrating an overall configuration of the robot arm 1 in FIG. 1. Referring to FIG. 1 to FIG. 3, an overall configuration of the robot arm 1 including the end effector 10 will mainly be described.

As illustrated in FIG. 1 and FIG. 2, the robot arm 1 includes a housing 1a that constitutes a body, and the end effector 10 attached to the housing 1a at a distal end of the robot arm 1. An end portion of the end effector 10 opposite a portion for gripping an object is attached to the housing 1a, whereby the end effector 10 is supported by the housing 1a. The end effector 10 is driven while supported by the housing 1a, and grips an object.

The end effector 10 is used for robots. For example, the end effector 10 functions as a part of a robot with the robot arm 1. In the present disclosure, examples of the "robot" include industrial robots, nursing robots, marine robots, medical robots, and movable bodies such as vehicles and drones that make autonomous decisions and move. Examples of "industrial robots" include cooperative robots that can work together with workers in the same space and other robots that work in isolation from workers. The end effector 10 is configured as a robot hand or a robot gripper in such a robot. The end effector 10 includes a body part 11 containing a resin, and a circuitry part 12 including circuitry integrally formed with the resin in the body part 11.

The body part 11 constitutes the entire external shape of the end effector 10. The body part 11 has an attachment portion 11a that is attached to the housing 1a of the robot arm 1. The body part 11 has a pair of claws 11b protruding from an end portion of the attachment portion 11a that is located opposite the housing 1a. The pair of claws 11b grips an object, for example, by reducing the distance between them to approximately the same width of the object. As an example, the whole of the body part 11 including the attachment portion 11a and the claws 11b is formed of a resin.

As described later, in the present disclosure, the "resin" includes, for example, a thermoplastic resin. The "thermoplastic resin" includes, for example, at least one selected from the group consisting of engineering plastics and super engineering plastics. The thermoplastic resin is, for example, a polyarylene sulfide resin. More specifically, the thermoplastic resin includes a polyarylene sulfide resin such as polyphenylene sulfide resin.

As illustrated in FIG. 3, the robot arm 1 includes a memory 20, a driver 30, and a controller 40, in addition to the end effector 10 having the body part 11 and the circuitry part 12. The memory 20, the driver 30, and the controller 40 are accommodated in the housing 1a of the robot arm 1.

The memory 20 includes, for example, a semiconductor memory, a magnetic memory, an optical memory, or any combination thereof. The memory 20 functions, for example, as a main memory, an auxiliary memory, or a cache memory.

The memory 20 stores information to be used for the operation of the robot arm 1 and information obtained by the operation of the robot arm 1. For example, the memory 20 stores a system program, an application program, and various data obtained by any means, such as communications.

The driver 30 includes, for example, any drive mechanism for driving the end effector 10. The drive mechanism includes, for example, a plurality of gears and a motor for rotating the gears. The driver 30 drives the end effector 10 according to a control signal from the controller 40. The driver 30, for example, drives the claws 11b in accordance with a control signal from the controller 40 so that the claws 11b of the body part 11 of the end effector 10 grip an object.

The controller 40 includes a microcontroller, a processor, a programmable circuit, a dedicated circuit, or any combination thereof. The processor is a general-purpose processor such as a CPU or a GPU or a dedicated processor specialized for specific processing. The "CPU" is an abbreviation for central processing unit. The "GPU" is an abbreviation for graphics processing unit. The programmable circuit is, for example, an FPGA. The "FPGA" is an abbreviation for field-programmable gate array. The dedicated circuit is, for example, an ASIC. The "ASIC" is an abbreviation for application specific integrated circuit. The controller 40 is communicatively connected to each component of the robot arm 1 and executes various processing related to the operation of the robot arm 1 while controlling each component.

In the following, the functions of the end effector 10 will mainly be described.

The circuitry part 12 of the end effector 10 contributes to a predetermined function. In the present disclosure, the "predetermined function" includes, for example, first, second, third, and fourth functions. The first function is a function of detecting that the body part 11 comes into contact with a first object. The second function is a function of detecting the height of a second object. The third function is a function of detecting the magnitude of pressure generated when the end effector 10 grips a third object. The fourth function is a function of generating a magnetic field to transmit electric power to a fourth object. The first, second, third, and fourth objects may be identical to each other or different from each other.

As illustrated in FIG. 2, the circuitry of the circuitry part 12 is directly drawn on a surface of the resin forming the claws 11b of the body part 11. In the circuitry of the circuitry part 12, wiring and electrodes are formed in each region of the surface of the resin forming the claws 11b. The circuitry of the circuitry part 12 is configured, for example, as molded circuitry using LDS among MIDs. "MID" is an abbreviation for molded interconnect device. "LDS" is an abbreviation for laser direct structuring. The circuitry of the circuitry part 12 is formed by directly irradiating a surface of the body part 11 as a molded article with a laser beam and by plating.

The circuitry of the circuitry part 12 has wiring formed in a predetermined pattern on the surface of the resin of the body part 11 and contributes to a predetermined function based on the wiring itself. The circuitry of the circuitry part 12 includes a first circuit 121, a second circuit 122, a third circuit 123, and a fourth circuit 124.

The first circuit 121 is formed, for example, on each of the outer surfaces of the pair of claws 11b in a spacing direction D1 in which the pair of claws 11b are spaced apart from each other. The outer surface of the claw 11b is a surface located on a back side opposite a front side of the claw 11b. The front side is the side on which the claws 11b grip an object. The first circuit 121 is formed on the outer surface of the claw 11b over the entire portion of the body part 11 excluding a distal end portion in an extension direction D2 of the body part 11. The extension direction D2 is orthogonal to the spacing direction D1. The first circuit 121 contributes to the first function.

The second circuit 122 is formed, for example, on each of the inner surfaces of the pair of claws 11b in the spacing direction D1. The inner surface of the claw 11b is the surface located on the front side of the claw 11b, which is the side on which the claws 11b grip an object. The second circuit 122 is located on the inner surface of the claw 11b at a central portion in the extension direction D2 of the body part 11. The second circuit 122 contributes to the second function.

The third circuit 123 is formed, for example, on each of the inner surfaces of the pair of claws 11b in the spacing direction D1. The third circuit 123 is located on the inner surface of the claw 11b at a distal end portion in the extension direction D2 of the body part 11. The third circuit 123 contributes to the third function.

The fourth circuit 124 is formed, for example, on each of the outer surfaces of the pair of claws 11b in the spacing direction D1. The fourth circuit 124 is located on the outer surface of the claw 11b at a distal end portion in the extension direction D2 of the body part 11. The fourth circuit 124 contributes to the fourth function.

FIG. 4 is a schematic diagram illustrating a first pattern P1 of wiring W1 of the first circuit 121 in FIG. 2. In FIG. 4, a first region R1 in FIG. 2 is enlarged to show only the first circuit 121 of the circuitry part 12.

The first circuit 121 has an input electrode E1 and an output electrode E2 formed on a surface of the resin of the claw 11b. The input electrode E1 and the output electrode E2 are formed in parallel with each other. The first circuit 121 has the wiring W1 formed in the first pattern P1 on the surface of the resin of the claw 11b and contributes to the first function based on the wiring W1 itself. The first pattern P1 corresponding to the first function includes at least one straight line connecting the input electrode E1 and the output electrode E2 formed integrally with the resin in the body part 11.

For example, the first pattern P1 includes three straight lines. The first pattern P1 includes a first straight line L1 extending from the input electrode E1, a second straight line L2 bent 90° from the first straight line L1, and a third straight line L3 further bent 90° from the second straight line L2 and extending to the output electrode E2. The first pattern P1 extends in an elongated shape along the extension direction D2 of the body part 11 over almost the whole of the region in which the claw 11b extends. The first pattern P1 corresponds to a shape of a letter "C" rotated 90° clockwise.

FIG. 5 is a schematic diagram illustrating a second pattern P2 of wiring W2 of the second circuit 122 in FIG. 2. In FIG. 5, a second region R2 in FIG. 2 is enlarged to show only the second circuit 122 of the circuitry part 12.

The second circuit 122 has four input electrodes E11, E12, E13, and E14 formed on a surface of the resin of the claw 11b. The second circuit 122 has four output electrodes E21, E22, E23, and E24 formed on the surface of the resin of the claw 11b. The input electrodes E11, E12, E13, and E14, and the output electrodes E21, E22, E23, and E24 are formed in parallel with each other.

The second circuit 122 has the wiring W2 formed in the second pattern P2 on the surface of the resin of the claw 11b and contributes to the second function based on the wiring W2 itself. The second pattern P2 corresponding to the second function includes a plurality of first patterns P1. In the second pattern P2, one straight line included in each of the first patterns P1 is arranged along the extension direction D2 of the body part 11. More specifically, the second straight line L2 included in each of the first patterns P1 is arranged along the extension direction D2 of the body part 11.

The input electrode E11 and the output electrode E21 are connected by the first pattern P11. The input electrode E12 and the output electrode E22 are connected by the first pattern P12. The input electrode E13 and the output electrode E23 are connected by the first pattern P13. The input electrode E14 and the output electrode E24 are connected by the first pattern P14.

A second straight line L21 of the first pattern P11, a second straight line L22 of the first pattern P12, a second straight line L23 of the first pattern P13, and a second straight line L24 of the first pattern P14 are arranged along the extension direction D2 of the body part 11. In the second pattern P2, the first pattern P11 is located the innermost, and the first patterns P12, P13, and P14 are located outside the first pattern P11 in this order. In this configuration, the second straight lines L21, L22, L23, and L24 are discretely arranged in order from the proximal end at the attachment portion 11a of the claw 11b toward the distal end portion along the extension direction D2 of the body part 11.

FIG. 6A is a schematic diagram illustrating a third pattern P3 of wiring W3 of the third circuit 123 in FIG. 2. In FIG. 6A, a third region R3 in FIG. 2 is enlarged to show the distal end portion of the claw 11b as well as the third circuit 123 of the circuitry part 12. In FIG. 6A, a resistive element R and a third object S, which are not depicted in FIG. 2, are additionally depicted in addition to the third circuit 123 and the distal end portion of the claw 11b.

The third circuit 123 has an input electrode E1 and an output electrode E2 formed on the surface of the resin of the claw 11b. The input electrode E1 and the output electrode E2 are formed in parallel with each other. The third circuit 123 has the wiring W3 formed in the third pattern P3 on the surface of the resin of the claw 11b and contributes to the third function based on the wiring W3 itself. The third pattern P3 corresponding to the third function functions as a strain gauge. For example, the third pattern P3 repeats folding a straight line 180° at one end and further folding the folded straight line 180° at the other end.

The third circuit 123 has two gauge leads L5 that connect one end and the other end of the wiring W3 formed in the third pattern P3 to the input electrode E1 and the output electrode E2, respectively. The gauge leads L5, as well as the input electrode E1 and the output electrode E2 and the wiring W3, are formed, for example, on the surface of the resin of the claw 11b.

FIG. 6B is a schematic diagram of the configuration illustrated in FIG. 6A as viewed from a side direction. As illustrated in FIG. 6B, the resistive element R is attached to the wiring W3 by bonding or any other method on a surface of the wiring W3 opposite the claw 11b in the third circuit 123. Thus, when the end effector 10 grips the third object S, the third object S comes into direct contact with the resistive element R, rather than the wiring W3.

FIG. 7 is a schematic diagram illustrating a fourth pattern P4 of wiring W4 of the fourth circuit 124 in FIG. 2. In FIG. 7, a fourth region R4 in FIG. 2 is enlarged to show only the fourth circuit 124 of the circuitry part 12.

The fourth circuit 124 has an input electrode E1 and an output electrode E2 formed on a surface of the resin of the claw 11b. The input electrode E1 and the output electrode E2 are formed at locations considerably different from each other. The fourth circuit 124 has the wiring W4 formed in the fourth pattern P4 on the surface of the resin of the claw 11b and contributes to the fourth function based on the wiring W4 itself. The fourth pattern P4 corresponding to the fourth function is helical. The wiring W4 is configured as a helical coil.

In the fourth circuit 124, the input electrode E1 is directly connected to one end of the wiring W4 on the surface of the resin of the claw 11b. On the other hand, the output electrode E2 is indirectly connected to the other end of the wiring W4 via a connection line located inside the resin of the claw 11b as indicated by a dotted line.

A thermoplastic resin is preferred as the resin used in one embodiment. Examples of the thermoplastic resin include, but not limited to, polyolefin resins such as polypropylene, polyethylene, and polybutene; polyester resins such as polyethylene terephthalate and polybutylene terephthalate; polyamide resins such as nylon-6 and nylon 6,6 or aromatic polyamide resins; thermoplastic polyimide resins; polyamide-imide resins; polystyrene resins such as polystyrene, syndiotactic polystyrene, acrylonitrile-styrene copolymer resin or acrylonitrile-butadiene-styrene copolymer resin; polyarylene sulfide resins such as polyphenylene sulfide; polyphenylene ether resins; polyurethane resins; polylactic acid; polyetherether ketone resins; polyetherimide resins; polyketone resins; polyarylate resins such as amorphous polyarylate and liquid crystalline polyarylate; and liquid crystalline polyester resins.

Among these, thermoplastic polyimide resins, polyamide-imide resins, polyarylene sulfide resins, polyphenylene ether resins, polyetherether ketone resins, polyetherimide resins, polyketone resins, polyarylate resins, and liquid crystalline polyester resins, which are engineering plastics or super engineering plastics with excellent heat resistance and mechanical properties, are preferred as the thermoplastic resin used in one embodiment. In terms of chemical resistance, heat resistance, and mechanical properties, polyarylene sulfide resins are more preferred. Among polyarylene sulfide resins (hereinafter also referred to as "PAS resins"), polyphenylene sulfide resins (hereinafter also referred to as "PPS resins") are especially preferred.

In one embodiment, the above resins may be used alone, or may be used in the form of a polymer alloy that is a mixture of more than one of the above resins. The resin according to one embodiment may contain a filler. The resin containing a filler may be in the form of a composition that contains the filler described later and the above resin and may also contain optional additive components described later (colorant, antistat, antioxidant, heat-resistant stabilizer, ultraviolet stabilizer, ultraviolet absorber, foaming agent, flame retarder, flame retardant promoter, antirust agent, coupling agent, silane-coupling agent, thermoplastic elastomer, or synthetic resin) if necessary.

The polyarylene sulfide resin has a resin structure containing as a repeating unit a structure in which an aromatic ring and a sulfur atom are bonded. Specifically, the polyarylene sulfide resin is a resin containing as repeating units a structural moiety represented by the following general formula (1) and a trifunctional structural moiety represented by the following general formula (2) if necessary.

[Chemical Formula 1]

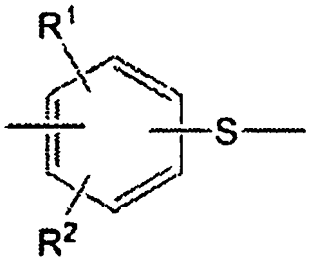

Formula (1)

wherein $R^1$ and $R^2$ each independently represent a hydrogen atom, an alkyl group having 1 to 4 carbon atoms, a nitro group, an amino group, a phenyl group, a methoxy group, or an ethoxy group.

[Chemical Formula 2]

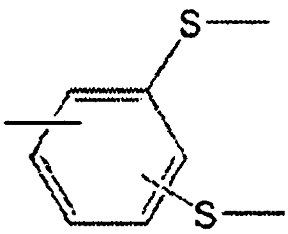

Formula (2)

The amount of the trifunctional structural moiety represented by the formula (2) is preferably within the range of 0.001 to 3% by mole, and particularly preferably within the range of 0.01 to 1% by mole, relative to the total number of moles of other structural moieties.

Herein, the structural moiety represented by the formula (1), especially $R^1$ and $R^2$ in the formula are preferably a hydrogen atom in terms of mechanical strength of the PAS resin. In this case, examples of the structural moiety include a structural moiety represented by the following formula (3) and having bonds at para positions and a structural moiety represented by the following formula (4) and having bonds at meta positions.

[Chemical Formula 3]

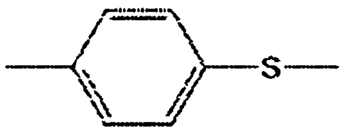

Formula (3)

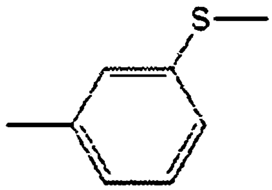

Formula (4)

In particular, the structural moiety represented by the general formula (3) in which a bond of the aromatic ring to the sulfur atom in the repeating unit is a bond at a para position is preferable in terms of heat resistance and crystallinity of the PAS resin.

The PAS resin may include, in addition to the structural moieties represented by the formulae (1) and (2), structural moieties represented by the following structural formulae (5) to (8) in an amount of 30% by mole or less relative to the total amount of the structural moieties represented by the formulae (1) and (2).

[Chemical Formula 4]

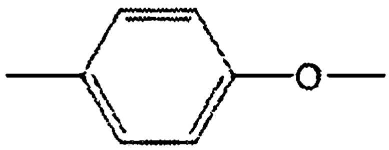

Formula (5)

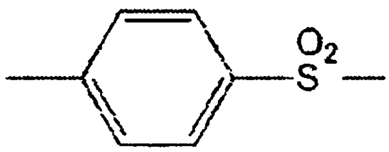

Formula (6)

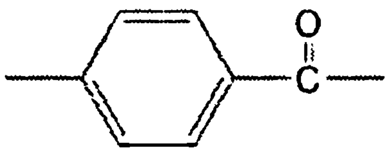

Formula (7)

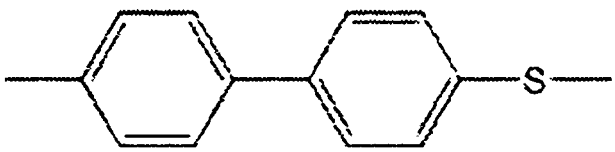

Formula (8)

In particular, in one embodiment, it is preferable that the amount of the structural moieties represented by the general formulae (5) to (8) is 10% by mole or less in terms of heat resistance and mechanical strength of the PAS resin. When the PAS resin contains the structural moieties represented by the general formulae (5) to (8), the structural moieties may be bonded at any pattern to form any of a random copolymer or a block copolymer.

The molecular structure of the PAS resin may have a naphthyl sulfide bond and the like, and the amount thereof is preferably 3% by mole or less, and particularly preferably 1% by mole or less, relative to the total amount of the molecular structure and another structural moiety.

The physical properties of the PAS resin are not particularly limited as long as they do not impair the effects of one embodiment, and are as described below.

(Melt Viscosity)

The melt viscosity of the PAS resin is not particularly limited. The melt viscosity (V6) measured at 300°C is preferably 2 Pa·s or more, and preferably 1,000 Pa·s or less, more preferably 500 Pa·s or less, and further preferably 200 Pa·s or less since flowability and mechanical strength are well balanced. In the measurement of the melt viscosity (V6), a

flow tester CFT-500D manufactured by Shimadzu Corporation is used for the polyarylene sulfide resin. The melt viscosity is a value measured after the polyarylene sulfide resin is held at 300°C, a load of $1.96 \times 10^6$ Pa, and a L/D of 10 (mm)/1 (mm) for 6 minutes.

(Non-Newtonian Index)

The non-Newtonian index of the PAS resin is not particularly limited, and is preferably within the range of 0.90 or more and 2.00 or less. When a linear polyarylene sulfide resin is used, the non-Newtonian index is preferably 0.90 or more, and more preferably 0.95 or more, and preferably 1.50 or less, and more preferably 1.20 or less. Such a polyarylene sulfide resin has excellent mechanical physical properties, flowability, and abrasion resistance. In one embodiment, the non-Newtonian index (N value) is a value calculated by the following equation from a shear rate (SR) and a shear stress (SS) that are measured using Capilograph under conditions of a melting point plus 20°C and a ratio L/D of an orifice length (L) to an orifice diameter (D) of 40. As the non-Newtonian index (N value) is closer to 1, the structure is closer to a linear shape. As the non-Newtonian index (N value) is higher, the structure is more branched.

[Equation 1]

$$SR = K \cdot SS^N$$

SR represents a shear rate ($S^{-1}$). SS represents a shear stress (dyn/cm$^2$). K is a constant.

The resin used in one embodiment is mixed with a metal oxide containing at least one of copper and chromium for the purpose of forming molded circuitry using LDS. In the resulting molded article, the metal oxide has, for example, the function of generating heat by laser irradiation and melting the resin to achieve surface roughness of the molded article, and the function of being activated by laser irradiation to selectively form a plating layer.

The metal oxide contains at least one of copper and chromium. The metal oxide may further contain other metals such as iron, aluminum, gallium, boron, molybdenum, tungsten, and selenium.

Specific examples of the metal oxide include, but not limited to, $CuFe_{0.5}B_{0.5}O_{2.5}$, $CuAl_{0.5}B_{0.5}O_{2.5}$, $CuGa_{0.5}B_{0.5}O_{2.5}$, $CuB_2O_4$, $CuB_{0.7}O_2$, $CuMo_{0.7}O_3$, $CuMo_{0.5}O_{2.5}$, $CuMoO_4$, $CuWO_4$, $CuSeO_4$, and $CuCr_2O_4$. Among these, the metal oxide is preferably $CuCr_2O_4$, $CuFe_{0.5}B_{0.5}O_{2.5}$, or $CuAl_{0.5}B_{0.5}O_{2.5}$, and more preferably $CuCr_2O_4$ or $CuFe_{0.5}B_{0.5}O_{2.5}$. These metal oxides may be used alone or in combination of two or more.

The average particle size of the metal oxide is preferably 0.01 μm or more, more preferably 0.05 μm or more, and preferably 50 μm or less, more preferably 30 μm or less. An average particle size of 0.01 μm or more of the metal oxide is preferred for efficient and stable production. On the other hand, an average particle size of 50 μm or less of the metal oxide is preferred to maintain material strength. In the present disclosure, "average particle size of the metal oxide" means the number average particle size, and a value measured by electron microscopic photography is employed. Specifically, the particle sizes of 100 particles of the metal oxide arbitrarily selected in a field of view of an electron microscope are measured and the average value is calculated.

The Mohs hardness of the metal oxide is preferably 4.0 or higher and preferably 6.5 or lower, more preferably 6.0 or lower.

The amount of the metal oxide mixed is preferably 15 parts by mass or more, and more preferably 20 parts by mass or more, even more preferably 25 parts by mass or more, and preferably 90 parts by mass or less, relative to 100 parts by mass of the PAS resin. It is preferable that the amount of the metal oxide mixed is 15 parts by mass or more relative to 100 parts by mass of the PAS resin, in that surface roughness and activation of the metal oxide by laser irradiation can occur to a high degree in the resulting molded article, and that plating properties are excellent. On the other hand, it is preferable that the amount of the metal oxide mixed is 90 parts by mass or less relative to 100 parts by mass of the PAS resin, in order to maintain material strength.

As the filler, a commonly known material can be used as long as it does not impair the effects of one embodiment. Examples thereof include a fibrous filler, a nonfibrous filler such as particulate or plate-like filler, and fillers having various shapes. Specifically, a fibrous filler including natural fibers such as glass fibers, carbon fibers, silane glass fibers, ceramic fibers, aramid fibers, metal fibers, or fibers of potassium titanate, silicon carbide, calcium silicate, or wollastonite can be used. A nonfibrous filler such as glass beads, glass flakes, barium sulfate, clay, pyrophyllite, bentonite, sericite, mica, talc, kerolite, pimelite, pyrophyllite, hydrotalcite, kaolinite, attapulgite, ferrite, calcium silicate, calcium carbonate, glass beads, zeolite, milled fibers, or calcium sulfate can also be used.

The amount of the filler in one embodiment is not particularly limited as long as it does not impair the effects of one embodiment. The amount of the filler mixed is preferably 1 part by mass or more, and more preferably 10 parts by mass or more, and preferably 600 parts by mass or less, and more preferably 200 parts by mass or less, relative to 100 parts by mass of the resin. When it is within such a range, the resin exhibits favorable mechanical strength and moldability. Therefore, this is preferred.

The resin used in one embodiment may contain as an optional component a silane-coupling agent if necessary. The silane-coupling agent is not particularly limited as long as it does not impair the effects of one embodiment. Preferable examples of the silane-coupling agent include a silane-coupling agent having a functional group to be reacted with a carboxy group, such as an epoxy group, an isocyanato group, an amino group, or a hydroxyl group. Examples of such a silane-coupling agent include an epoxy group-containing alkoxysilane compound, such as γ-glycidoxypropyltrimethoxysilane, γ-glycidoxypropyltriethoxysilane, and β-(3,4-epoxycyclohexyl)ethyltrimethoxysilane, an isocyanato group-containing alkoxysilane compound, such as γ-isocyanatopropyltrimethoxysilane, γ-isocyanatopropyltriethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane, and γ-isocyanatopropyltrichlorosilane, an amino group-containing alkoxysilane compound, such as γ-(2-aminoethyl)aminopropylmethyldimethoxysilane, γ-(2-aminoethyl)aminopropyltrimethoxysilane, and γ-aminopropyltrimethoxysilane, and a hydroxyl group-containing alkoxysilane compound, such as γ-hydroxypropyltrimethoxysilane, and γ-hydroxypropyltriethoxysilane. When the silane-coupling agent, which is not an essential component in one embodiment, is mixed, the amount of the silane-coupling agent mixed is not particularly limited as long as it does not impair the effects of one embodiment. The amount is preferably 0.01 parts by mass or more, and more preferably 0.1 part by mass or more, and preferably 10 parts by mass or less, and more preferably 5 parts by mass or less, relative to 100 parts by mass of the resin. When it is within such a range, the resin has favorable corona resistance and moldability, and especially mold releasability, and the molded article exhibits excellent adhesive properties to the epoxy resin and further improved mechanical strength. Therefore, this is preferred.

The resin used in one embodiment may contain as the optional component a thermoplastic elastomer if necessary. Examples of the thermoplastic elastomer include a polyolefin-based elastomer, a fluorine-containing elastomer, and a silicone-based elastomer. Among these, a polyolefin-based elastomer is preferred. When the elastomer is added, the amount of the elastomer is not particularly limited as long as it does not impair the effects of one embodiment. The amount of the elastomer mixed is preferably 0.01 parts by mass or more, and more preferably 0.1 parts by mass or more, and preferably 10 parts by mass or less, and more preferably 5 parts by mass or less, relative to 100 parts by mass of the resin (A). When it is within such a range, the impact resistance of the obtained resin is improved. Therefore, this is preferred.

Examples of the polyolefin-based elastomer include a homopolymer of α-olefin, a copolymer of two or more α-olefins, and a copolymer of one or two or more α-olefins with a vinyl polymerizable compound having a functional group. Examples of the α-olefins include α-olefins having 2 or more and 8 or less carbon atoms, such as ethylene, propylene, and 1-butene. Examples of the functional group include a carboxy group, an acid anhydride group (-C(=O)OC(=O)-), an epoxy group, an amino group, a hydroxyl group, a mercapto group, an isocyanate group, and an oxazoline group. Examples of the vinyl polymerizable compound having the functional group include one or two or more of vinyl acetate; an α,β-unsaturated carboxylic acid, such as (meth)acrylic acid; an alkyl ester of an α,β-unsaturated carboxylic acid, such as methyl acrylate, ethyl acrylate, and butyl acrylate; a metal salt of an α,β-unsaturated carboxylic acid, such as an ionomer (in which the metal is an alkali metal such as sodium, an alkaline earth metal such as calcium, zinc, or the like); a glycidyl ester of an α,β-unsaturated carboxylic acid, such as glycidyl methacrylate; an α,β-unsaturated dicarboxylic acid, such as maleic acid, fumaric acid, and itaconic acid; and a derivative (monoester, diester, acid anhydride) of the α,β-unsaturated dicarboxylic acid. The thermoplastic elastomer may be used alone, or two or more types thereof may be used in combination.

In addition to the aforementioned components, the resin used in one embodiment can further contain as an optional component a synthetic resin (hereinafter sometimes simply referred to as synthetic resin) such as a polyester resin, a polyamide resin, a polyimide resin, a polyetherimide resin, a polycarbonate resin, a polyphenylene ether resin, a polysulfone resin, a polyether sulfone resin, a polyetherether ketone resin, a polyether ketone resin, a polyarylene resin, a polyethylene resin, a polypropylene resin, a polytetrafluoroethylene resin, a polydifluoroethylene resin, a polystyrene resin, an ABS resin, a phenol resin, a urethane resin, or a liquid crystal polymer, as appropriate. In one embodiment, the synthetic resin is not an essential component. When the synthetic resin is mixed, the amount of the synthetic resin mixed is not particularly limited as long as it does not impair the effects of one embodiment. The amount varies according to the purpose thereof, and cannot be generally defined. For example, the amount of the synthetic resin mixed in the resin according to one embodiment is within the range of 5 parts by mass or more and 15 parts by mass or less relative to 100 parts by mass of the resin. In other words, the ratio by mass of the resin (A) to the total amount of the resin (A) and the synthetic resin is preferably 100/115 or more, and more preferably 100/105 or more.

Furthermore, the resin used in one embodiment may contain as an optional component a commonly known additive such as a colorant, an antistat, an antioxidant, a heat-resistant stabilizer, an ultraviolet stabilizer, an ultraviolet absorber, a foaming agent, a flame retarder, a flame retardant promoter, an antirust agent, or a coupling agent if necessary. The additive is not an essential component. The amount of the additive is preferably within the range of 0.01 parts by mass or more and 1,000 parts by mass or less relative to 100 parts by mass of the resin. The amount of the additive may be appropriately adjusted according to a purpose and use application for use without impairing the effects of one embodiment.

A method for producing the resin used in one embodiment will be described in detail below.

The resin used in one embodiment is mixed with each of the essential components and other optional components if necessary. Examples of the method for producing the resin used in one embodiment include, but not particularly limited to, a method in which the essential components and optional components if necessary are mixed and melt-kneaded, and specifically, are mixed uniformly under drying by a tumbler, a Henschel mixer, or the like if necessary, and then supplied to a twin-screw extruder and melt-kneaded.

Melt-kneading can be performed under heating within a temperature range at which the resin temperature is equal to or higher than the melting point of the resin, a temperature range at which the resin temperature is preferably equal to or higher than the melting point plus 10°C, and a temperature range at which the resin temperature is more preferably equal to or higher than the melting point plus 10°C or still more preferably equal to or higher than the melting point plus 20°C, and preferably equal to or lower than the melting point plus 100°C or still more preferably equal to or lower than the melting point plus 50°C.

From the viewpoint of dispersibility and productivity, it is preferable that a melt-kneader is a twin-screw kneading extruder. For example, it is preferable that melt-kneading is performed while the amount of resin component discharged is controlled within the range of 5 to 500 (kg/hr) and the screw rotational speed is controlled within the range of 50 to 500 (rpm) as appropriate, and it is further preferable that melt-kneading is performed under a condition in which the ratio (the amount/the rotational speed) is within the range of 0.02 to 5 (kg/hr/rpm). Each of the components may be added to the melt-kneader and mixed simultaneously or separately. For example, when the additive among the components is added, it is preferable that the additive is supplied to the extruder from a side feeder of the twin-screw kneading extruder from the viewpoint of dispersibility. The side feeder is positioned such that the ratio of the distance between a resin-supplying portion (top feeder) of the extruder and the side feeder to the full length of screw of the twin-screw kneading extruder is preferably 0.1 or more, and more preferably 0.3 or more. The ratio is preferably 0.9 or less, and more preferably 0.7 or less.

The resin according to one embodiment thus obtained by melt-kneading is a melt-kneaded mixture containing the essential components, and the optional component and a component derived from the optional component added if necessary. It is preferable that after the melt-kneading, a known method is performed, for example, the resin in a melted state is extrusion molded into a strand shape and then processed in a form of pellet, chip, granule, powder, or the like, and if necessary, pre-dried within the temperature range of 100 to 150°C.

A molded article according to one embodiment is formed by molding the resin. A method for manufacturing the molded article according to one embodiment includes a step of melt-molding the resin. The method will be described in detail below.

The resin used in one embodiment is injection-molded. Molding conditions are not particularly limited. The resin can be molded usually by a general method. For example, after the step of melting the resin in an injection molding machine such that the resin temperature is equal to or higher than the melting point of the resin, preferably equal to or higher than the melting point plus 10°C, more preferably within the range of the melting point plus 10°C to the melting point plus 100°C, and further preferably within the range of the melting point plus 20°C to the melting point plus 50°C, the resin may be injected into a mold from a resin discharge port and molded. In this case, the mold temperature may be set within a publicly known temperature range, for example, to room temperature (23°C) to 300°C, and preferably 120°C to 180°C.

The end effector 10 according to one embodiment as described above can contribute to more functions with a simpler configuration. The end effector 10 includes the circuitry part 12 that includes circuitry integrally formed with the resin in the body part 11 and contributes to a predetermined function. The end effector 10 can contribute not only to a basic function of gripping an object, but also to various functions described above. Since the circuitry of the circuitry part 12 is formed integrally with the resin, for example, unlike the conventional technology, the end effector 10 does not require additional arrangement of a sheet or film for a sensor and a substrate for forming an electric circuit. The end effector 10 does not require additional provision of a bonding portion or a lamination portion of the sheet, film, and substrate.

As a result, the end effector 10 can achieve reduction of the number of parts, downsizing, and weight reduction, and can also meet the payload limit of the robot arm 1. The end effector 10 also allows for greater freedom in its shape design. In addition, since the body part 11 contains the resin, the end effector 10 has also improved waterproofness and water resistance and can be cleaned for preventing the spread of infectious diseases and for other hygiene purposes. Unlike conventional metal end effectors, the end effector 10 is lightweight and less likely to rust when cleaned.

The circuitry of the circuitry part 12 has wiring formed in a predetermined pattern on the surface of the resin of the body part 11 and contributes to a predetermined function based on the wiring itself. The end effector 10 is thus an integrated molded article in which circuitry is directly drawn on the end effector 10 to contribute to a predetermined function. The end effector 10 does not require additional provision of wiring such as harnesses and substrates, because the drawn circuitry itself serves as means for transmitting electrical signals. The end effector 10 can avoid the complexity of its shape and achieve a simpler configuration without requiring a shape, space, and the like for accommodating wired harnesses and substrates with circuitry.

The end effector 10 tends to be electrically charged because the body part 11 contains a resin, but even in such a case, the charge can be easily removed by the plating wiring in the metallic circuitry formed on its surface. The end effector 10 can effectively remove electrostatic charges by a path geometry of the wiring directly drawn on its surface.

The end effector 10 can contribute to the first function since the first pattern P1 includes at least one straight line connecting the input electrode E1 and the output electrode E2. More specifically, when the first object comes into contact with the wiring W1 formed as at least one straight line connecting the input electrode E1 and the output electrode E2, the resistance of the wiring W1 changes due to leakage current at the contact point. This causes the voltage to change between the input electrode E1 and the output electrode E2. For example, by detecting such a voltage change, the controller 40 of the robot arm 1 determines that the body part 11 of the end effector 10 comes into contact with the first object. The end effector 10 therefore contributes to the first function by outputting such a voltage change as information to the controller 40 of the robot arm 1.

The robot arm 1 can stop the movement of the end effector 10 when the end effector 10 comes into contact with the first object by means of contact detection by the controller 40 to prevent further movement of the end effector 10 toward the first object. The robot arm 1 therefore can suppress a violent collision between the end effector 10 and the first object, which would cause the end effector 10 itself to fail or the first object to be damaged. The end effector 10 can improve safety related to the operation of the robot arm 1.

The end effector 10 can contribute to the second function since one straight line included in each of a plurality of first patterns P1 in the second pattern P2 is arranged along the extension direction D2 of the body part 11. More specifically, according to the same principle as described above regarding contact detection, the controller 40 of the robot arm 1 can determine at which of the first patterns P11, P12, P13, and P14 the claw 11b of the end effector 10 is in contact with the second object.

The controller 40 therefore can measure, as a predetermined numerical range, the distance from the distal end portion of the claw 11b to an upper end of the contact point with the second object in a height direction that is parallel to the extension direction D2. In this case, the controller 40 may, for example, use the distance from the distal end portion of the claw 11b to each of the second straight lines L21, L22, L23, and L24 as information. Such information may be stored in advance, for example, in the memory 20.

For example, if the controller 40 determines that the claw 11b is in contact with the second object only at the first pattern P14, the predetermined numerical range can be determined based on a range between the second straight line L23 and the second straight line L24. For example, if the controller 40 determines that the claw 11b is in contact with the second object at the first pattern P14 and the first pattern P13, the predetermined numerical range can be determined based on a range between the second straight line L22 and the second straight line L23. For example, if the controller 40 determines that the claw 11b is in contact with the second object at the first pattern P14, the first pattern P13, and the first pattern P12, the predetermined numerical range can be determined based on a range between the second straight line L21 and the second straight line L22. For example, if the controller 40 determines that the claw 11b is in contact with the second object at all of the first patterns P1, the predetermined numerical range can be determined based on a range above the second straight line L21.

For example, if the controller 40 can acquire the current position in the height direction measured from a reference plane such as the ground and floor with respect to the distal end portion of the claw 11b, as information, by any method, the height from the reference plane to the upper end of the contact point with the second object can be calculated as a numerical range.

As an example, the controller 40 can measure the water level or the height of the top of the content contained in a container. The controller 40 controls the operation of the end effector 10 via the driver 30 so that the distal end of the claw 11b of the end effector 10 comes into contact with the bottom of the container. The controller 40 aligns the distal end position of the claw 11b of the end effector 10 with the bottom. In this state, the controller 40 determines which of the first patterns P11, P12, P13, and P14 is in contact with the content. The controller 40 can measure the water level or the height of the top of the content as the predetermined numerical range based on the result of the determination.

The first pattern P1 includes the first straight line L1 extending from the input electrode E1, the second straight line L2 bent 90° from the first straight line L1, and the third straight line L3 further bent 90° from the second straight line L2 and extending to the output electrode E2 formed in parallel with the input electrode E1. In the end effector 10, such a first pattern P1 makes it easier for the wiring W1 of the claw 11b to come into contact with the first object. For example, as illustrated in FIG. 2, this effect is more significant when the wiring W1 is formed on the outer surface of the claw 11b over the entire portion excluding the distal end portion in the extension direction D2. The same explanation regarding the above effects applies to the second pattern P2, which includes a plurality of first patterns P1.

The end effector 10 can contribute to the third function since the third pattern P3 functions as a strain gauge. More specifically, the third pattern P3 is a brush-like pattern that repeats folding a straight line 180° at one end and further folding the folded straight line 180° at the other end. When the third object S comes into contact with the wiring W3 formed in such a third pattern P3 via the resistive element R, the amount of strain in the wiring W3 changes according to a pressure at the contact point. As the amount of strain changes, the resistance of the wiring W3 also changes. This causes the voltage to change between the input electrode E1 and the output electrode E2. For example, by measuring the amount of change in such voltage change, the controller 40 of the robot arm 1 can calculate the pressure applied to the wiring W3. In this case, the controller 40 may use, for example, data that associates a pressure generated when the end effector 10 grips the third

object S with the amount of change in voltage change. Such data may be stored in advance, for example, in the memory 20.

As described above, the robot arm 1 can measure a pressure applied to the distal end portion of the claw 11b when gripping the third object S, by means of the third circuit 123 of the end effector 10. By detecting the magnitude of pressure applied to the distal end portion of the claw 11b, the robot arm 1 can appropriately adjust a load on the third object S applied when gripping the third object S. The robot arm 1 can suppress the application of a large load on the third object S when gripping the third object S, thereby suppressing damage to the third object S and failure of the end effector 10 itself.

The end effector 10 can contribute to the fourth function since the fourth pattern P4 is helical. The wiring W4 formed in the helical fourth pattern P4 can function as a coil. Therefore, when an electric current flows through the wiring W4, a magnetic field is generated, for example, which enables transmission of electric power to the fourth object proximate to the distal end portion of the claw 11b having the wiring W4, based on the principle of electromagnetic induction. The end effector 10 can also be applied for noncontact charging for the fourth object.

Since the resin includes a thermoplastic resin, and the thermoplastic resin is a polyarylene sulfide resin, the end effector 10 can have improved waterproofness and water resistance. In addition, the excellent chemical and heat resistance of the polyarylene sulfide resin also allows the end effector 10 to have improved chemical and heat resistance. As a result, the end effector 10 can be used in chemicals and can grip high-temperature materials.

Since the resin is mixed with a metal oxide containing at least one of copper and chromium, the molded circuitry using LDS can be easily formed in the end effector 10. The metal oxide containing at least one of copper and chromium in the end effector 10 can provide, for example, the function of generating heat by laser irradiation and melting the resin to achieve surface roughness of the resin, and the function of being activated by laser irradiation to selectively form a plating layer.

It is obvious to those skilled in the art that the present disclosure can be implemented in other predetermined forms other than the embodiments described above without departing from its spirit or its essential features. Therefore, the above description is illustrative and is not limiting. The scope of the disclosure is defined not by the above description but by the appended claims. Some modifications within a range of equivalents of all modifications are intended to be encompassed therein.

For example, the shape, pattern, size, arrangement, orientation, type, and number of each component described above are not limited to those illustrated in the above description and drawings. The shape, pattern, size, arrangement, orientation, type, and number of each component may be configured as desired as long as its function can be realized. Each component of the end effector 10 and the robot arm 1 illustrated in the figures is a functional concept, and the specific form of each component is not limited to those illustrated in the figures.

In the above embodiment, the first, second, third, and fourth functions are exemplified as a predetermined function, but the type and number of functions are not limited to these. The predetermined function may include only one or some of the first, second, third, and fourth functions. The predetermined function may include at least one other type of function instead of or in addition to at least one or some of the first, second, third, and fourth functions.

In the above embodiment, the circuitry of the circuitry part 12 is described as having wiring formed in a predetermined pattern on the surface of the resin of the body part 11 and contributing to a predetermined function based on the wiring itself, but is not limited to this. The circuitry of the circuitry part 12 may have a substrate integrally molded with the resin of the body part 11 and wiring formed in a predetermined pattern on the substrate, and may contribute to a predetermined function based on the wiring itself.

The circuitry of the circuitry part 12 may be configured based on a substrate integrally molded with a resin, for example, by insert molding. In the circuitry of the circuitry part 12, wiring and electrodes may be formed on the substrate. The circuitry of the circuitry part 12 may be configured, for example, as molded circuitry using IME among MIDs. "IME" is an abbreviation for in-mold electronics. The circuitry of the circuitry part 12 may be formed by inserting a flexible substrate or the like during injection molding. The end effector 10 is thus an integrally molded article in which a substrate is integrally molded with a resin to contribute to a predetermined function.

In the above embodiment, the first pattern P1 is described as including three straight lines, namely, the first straight line L1, the second straight line L2, and the third straight line L3, but is not limited to this. The first pattern P1 may be any other pattern that can contribute to the first function.

FIG. 8 is a schematic diagram illustrating the first pattern P1 of the wiring W1 of the first circuit 121 according to a modification of the present disclosure. In FIG. 8, the first region R1 in FIG. 2 is enlarged to show only the first circuit 121 of the circuitry part 12, in the same manner as in FIG. 4. As illustrated in FIG. 8, in the first circuit 121, the first pattern P1 may include only a fourth straight line L4 extending from the input electrode E1 to the output electrode E2. In the first circuit 121, the input electrode E1 and the output electrode E2 are not necessarily formed in parallel with each other but may be respectively formed at one end and the other end of the fourth straight line L4.

In the above embodiment, the second pattern P2 is described as including four first patterns P11, P12, P13, and P14, but is not limited to this. The second pattern P2 may be any other pattern that can contribute to the second function, instead of the pattern illustrated in FIG. 5. For example, the second pattern P2 may include more first patterns P1, which may be formed with smaller spacings along the extension direction D2. With this configuration, the end effector 10 can

have improved resolution by narrowing the above predetermined numerical range for height measurement.

FIG. 9 is a schematic diagram illustrating the second pattern P2 of the wiring W2 of the second circuit 122 according to a modification of the present disclosure. In FIG. 9, the second region R2 in FIG. 2 is enlarged to show only the second circuit 122 of the circuitry part 12, in the same manner as in FIG. 5. For example, the second pattern P2 may be configured as illustrated in FIG. 9 in accordance with the first pattern P1 illustrated in FIG. 8. For example, in the second pattern P2, one fourth straight line L4 included in each of a plurality of first patterns P1 may be arranged along the extension direction D2 of the body part 11.

A fourth straight line L41 of the first pattern P11, a fourth straight line L42 of the first pattern P12, a fourth straight line L43 of the first pattern P13, and a fourth straight line L44 of the first pattern P14 are arranged along the extension direction D2 of the body part 11. In the second pattern P2, the first pattern P11 is located most opposite to the distal end portion of the claw 11b, and the first patterns P12, P13, and P14 are located closer to the distal end portion of the claw 11b in this order. As a result, the fourth straight lines L41, L42, L43, and L44 are discretely arranged in order from the proximal end at the attachment portion 11a of the claw 11b toward the distal end portion along the extension direction D2 of the body part 11.

In the above embodiment, the second pattern P2 is described as contributing to the second function of detecting the height of the second object, but is not limited to this. For example, the robot arm 1 may move the end effector 10 in the horizontal direction rather than the height direction, whereby the second pattern P2 may contribute to the function of detecting the position of the second object along the horizontal direction.

In the above embodiment, the third pattern P3 is described as repeating folding a straight line 180° at one end and further folding the folded straight line 180° at the other end, but is not limited to this. The third pattern P3 may be any other pattern that can contribute to the third function.

In the above embodiment, the fourth pattern P4 is described as being helical, but is not limited to this. The fourth pattern P4 may be any other pattern that can contribute to the fourth function.

In the above embodiment, the circuitry of the circuitry part 12 is described as contributing to a predetermined function based on the wiring itself, but is not limited to this. The circuitry part 12 may have a sensor element that is mounted by soldering or the like on the circuitry of the circuitry part 12 and contributes to a predetermined function, instead of or in addition to the wiring that contributes to a predetermined function. In the present disclosure, the "sensor element" may include, for example, a microphone, a proximity sensor, a vibration sensor, a PH sensor, a LiDAR (light detection and ranging) sensor, and an image sensor. Based on the above, the end effector 10 can contribute to even more functions.

In addition, the circuitry part 12 may have a control element that is mounted by soldering or the like on the circuitry of the circuitry part 12 and performs processing necessary to achieve a predetermined function. In the present disclosure, the "control element" may include, for example, a microcontroller, a processor, a programmable circuit, a dedicated circuit, or any combination thereof. With this configuration, the end effector 10 can perform various processing performed by the controller 40 of the robot arm 1 as described above, by the end effector 10 itself. The end effector 10 can also perform a determination process, a learning process, and any other processes on its own.

In the above embodiment, the entire body part 11 including the attachment portion 11a and the claws 11b is described as being formed of a resin, but is not limited to this. As long as at least a portion having circuitry in the body part 11 is formed of a resin, other portions of the body part 11 may be formed of any material other than the resin.

In the above embodiment, the circuitry of the circuitry part 12 is described as including the first circuit 121, the second circuit 122, the third circuit 123, and the fourth circuit 124, but is not limited to this. The number and type of circuits included in the circuitry part 12 and their arrangement in the body part 11 may be defined in any configuration that can contribute to their respective functions. For example, when the predetermined function includes only one or some of the first, second, third, and fourth functions, the circuitry of the circuitry part 12 may include only those corresponding to the one or some. For example, when the predetermined function includes at least one other type of function instead of or in addition to at least one or some of the first, second, third, and fourth functions, the circuitry of the circuitry part 12 may include those corresponding to these functions.

In the above embodiment, each of the circuits of the circuitry part 12 is formed on the surface of the claw 11b and entirely exposed outside, but is not limited to this. Each of the circuits of the circuitry part 12 may be sealed with a resin with high waterproofness and water resistance, such as PPS resin, except for the portion that contributes to the predetermined function. With this configuration, the end effector 10 can have even more improved waterproofness and water resistance.

FIG. 10 is a schematic diagram illustrating the appearance of the end effector 10 according to a modification of the present disclosure. In the above embodiment, the end effector 10 is described as having a pair of claws 11b, that is, two claws 11b, but is not limited to this. The end effector 10 may have three or more claws 11b. For example, as illustrated in FIG. 10, the end effector 10 may have three claws 11b.

Reference Signs List

| | |
|---|---|
| 1 | robot arm |
| 1a | housing |
| 10 | end effector |
| 11 | body part |
| 11a | attachment portion |
| 11b | claw |
| 12 | circuitry part |
| 121 | first circuit |
| 122 | second circuit |
| 123 | third circuit |
| 124 | fourth circuit |
| 20 | memory |
| 30 | driver |
| 40 | controller |
| D1 | spacing direction |
| D2 | extension direction |
| E1, E11, E12, E13, E14 | input electrode |
| E2, E21, E22, E23, E24 | output electrode |
| L1 | first straight line |
| L2, L21, L22, L23, L24 | second straight line |
| L3 | third straight line |
| L4, L41, L42, L43, L44 | fourth straight line |
| L5 | gauge lead |
| P1, P11, P12, P13, P14 | first pattern |
| P2 | second pattern |
| P3 | third pattern |
| P4 | fourth pattern |
| R | resistive element |
| R1 | first region |
| R2 | second region |
| R3 | third region |
| R4 | fourth region |
| S | third object |
| W1, W2, W3, W4 | wiring |

**Claims**

**1.** An end effector for use in a robot, the end effector comprising:

a body part including a resin; and
a circuitry part including circuitry integrally formed with the resin in the body part, the circuitry part contributing to a predetermined function.

**2.** The end effector according to claim 1, wherein the circuitry has wiring formed in a predetermined pattern on a surface of the resin of the body part and contributes to the predetermined function based on the wiring itself.

**3.** The end effector according to claim 1, wherein the circuitry has a substrate integrally molded with the resin of the body part, and wiring formed in a predetermined pattern on the substrate, and contributes to the predetermined function based on the wiring itself.

**4.** The end effector according to claim 2 or 3, wherein

the function includes a first function of detecting that the body part comes into contact with a first object, and
the pattern corresponding to the first function includes a first pattern including at least one straight line connecting an input electrode and an output electrode integrally formed with the resin in the body part.

**5.** The end effector according to claim 4, wherein

the function includes a second function of detecting a height of a second object,
the pattern corresponding to the second function includes a second pattern including a plurality of the first patterns, and
in the second pattern, one straight line included in each of the plurality of the first patterns is arranged along an extension direction of the body part.

**6.** The end effector according to claim 4, wherein the first pattern includes a first straight line extending from the input electrode, a second straight line bent 90° from the first straight line, and a third straight line further bent 90° from the second straight line and extending to the output electrode formed in parallel with the input electrode.

**7.** The end effector according to claim 4, wherein the first pattern includes only a fourth straight line extending from the input electrode to the output electrode.

**8.** The end effector according to claim 2 or 3, wherein

the function includes a third function of detecting a magnitude of pressure generated when the end effector grips a third object, and
the pattern corresponding to the third function includes a third pattern that functions as a strain gauge.

**9.** The end effector according to claim 8, wherein the third pattern repeats folding a straight line 180° at one end and further folding the folded straight line 180° at another end.

**10.** The end effector according to claim 2 or 3, wherein

the function includes a fourth function of generating a magnetic field to transmit electric power to a fourth object, and
the pattern corresponding to the fourth function includes a helical fourth pattern.

**11.** The end effector according to any one of claims 1 to 3, wherein the circuitry part has a sensor element mounted on the circuitry and contributing to the predetermined function.

**12.** The end effector according to any one of claims 1 to 3, wherein the circuitry part has a control element mounted on the circuitry and configured to perform processing necessary to achieve the predetermined function.

**13.** The end effector according to any one of claims 1 to 3, wherein the resin includes a thermoplastic resin.

**14.** The end effector according to claim 13, wherein the thermoplastic resin includes at least one selected from the group consisting of engineering plastics and super engineering plastics.

**15.** The end effector according to claim 14, wherein the thermoplastic resin is a polyarylene sulfide resin.

**16.** The end effector according to any one of claims 1 to 3, wherein the resin is mixed with a metal oxide containing at least one of copper and chromium.

**17.** A robot arm comprising the end effector according to any one of claims 1 to 3.

*FIG. 1*

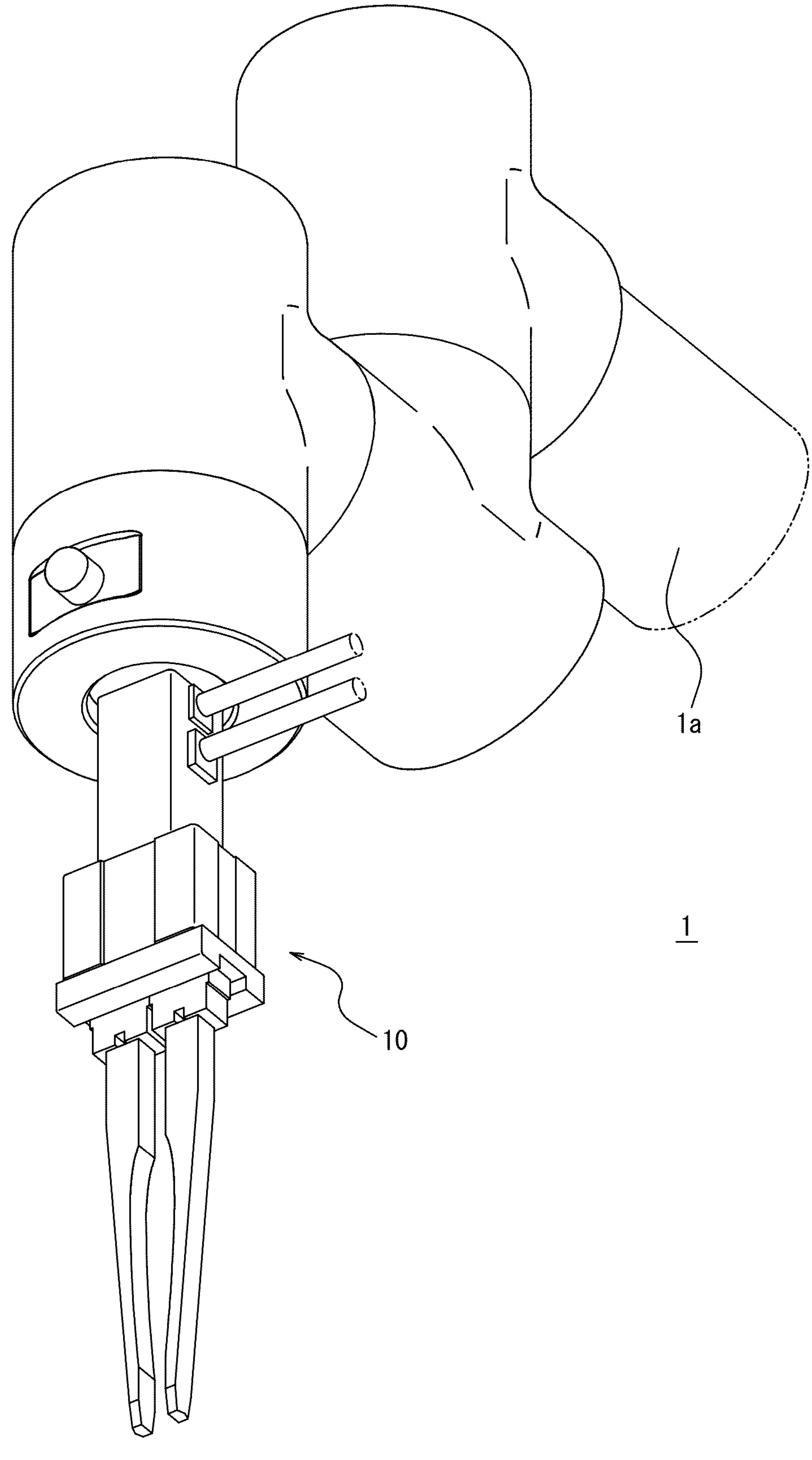

FIG. 2

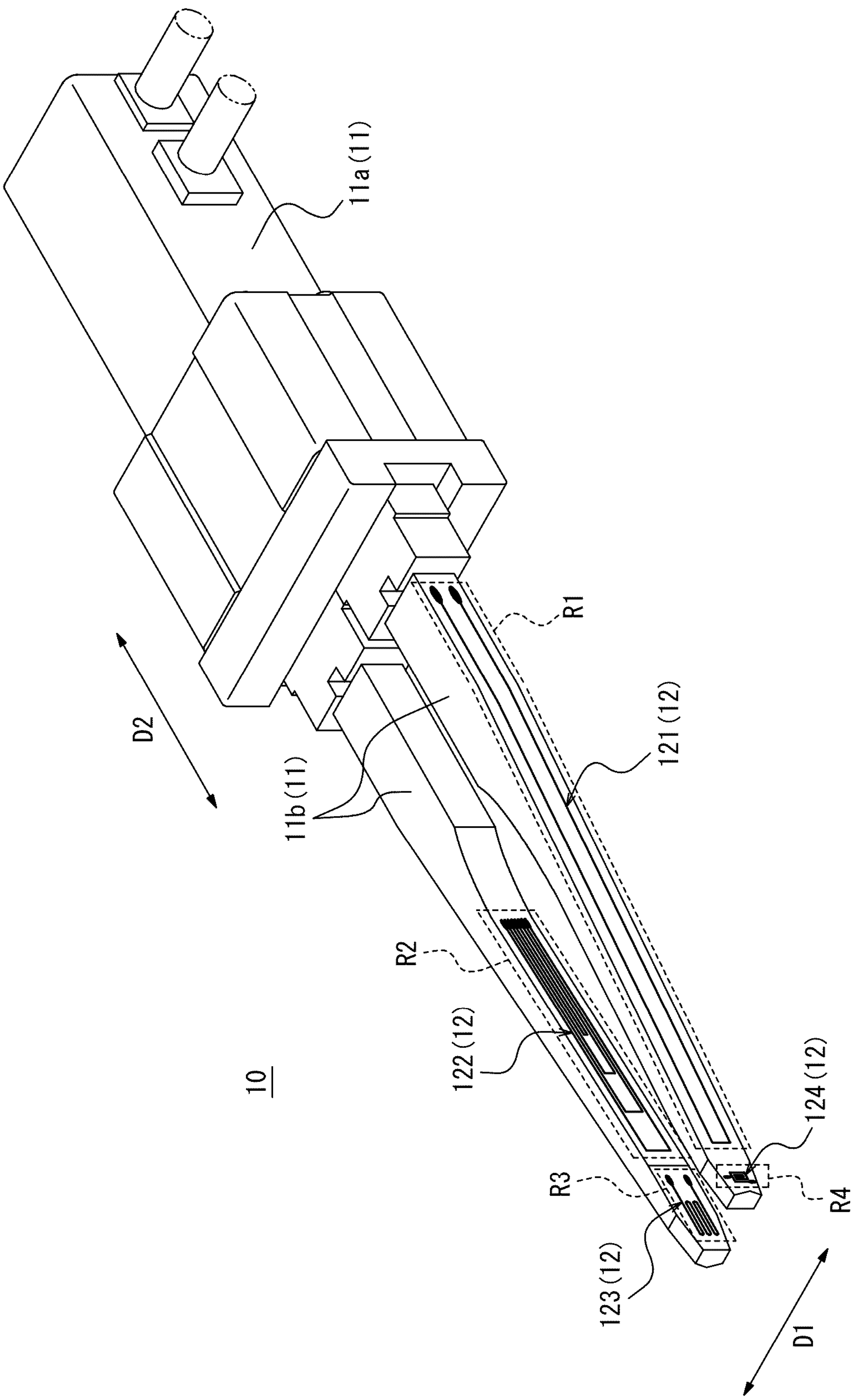

FIG. 3

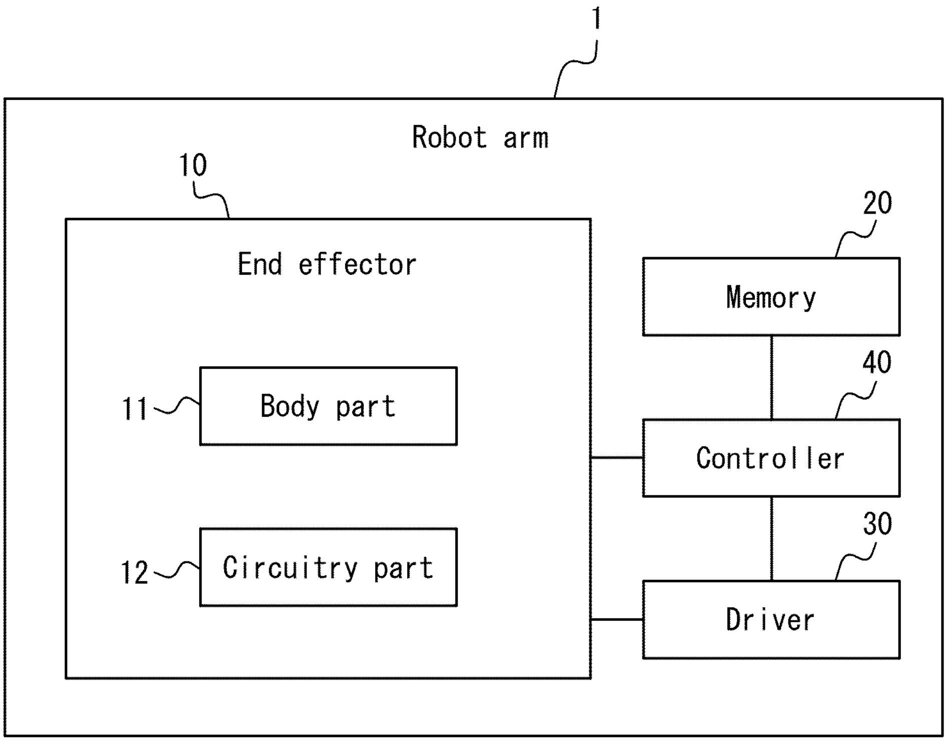
1
Robot arm
10
End effector
20
Memory
40
11
Body part
Controller
30
12
Circuitry part
Driver

FIG. 4

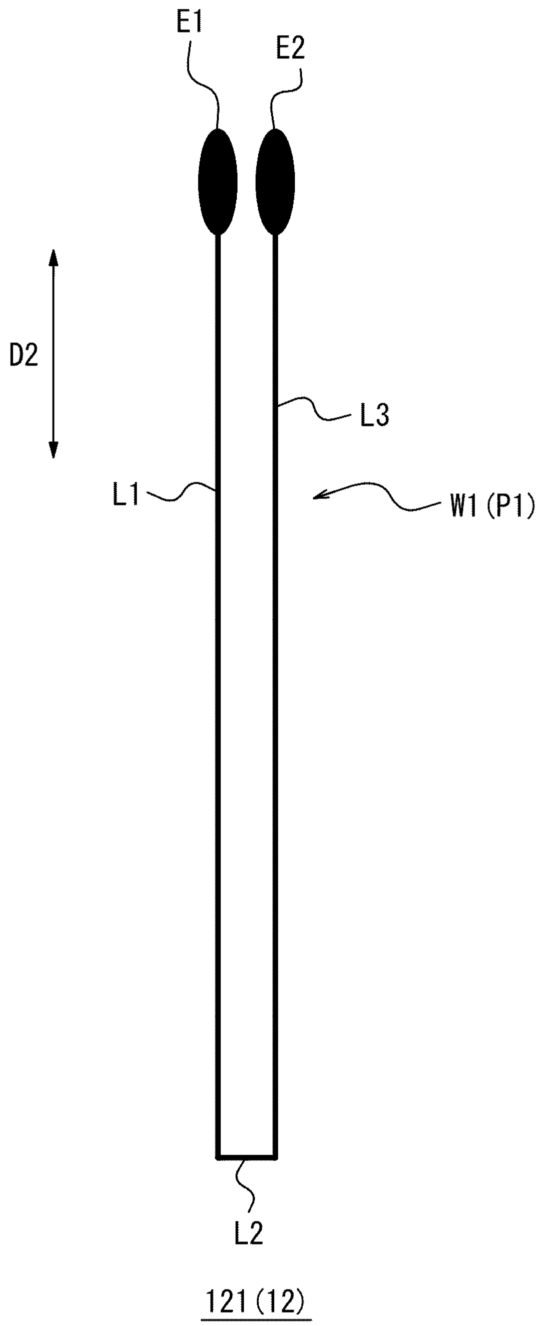

FIG. 5

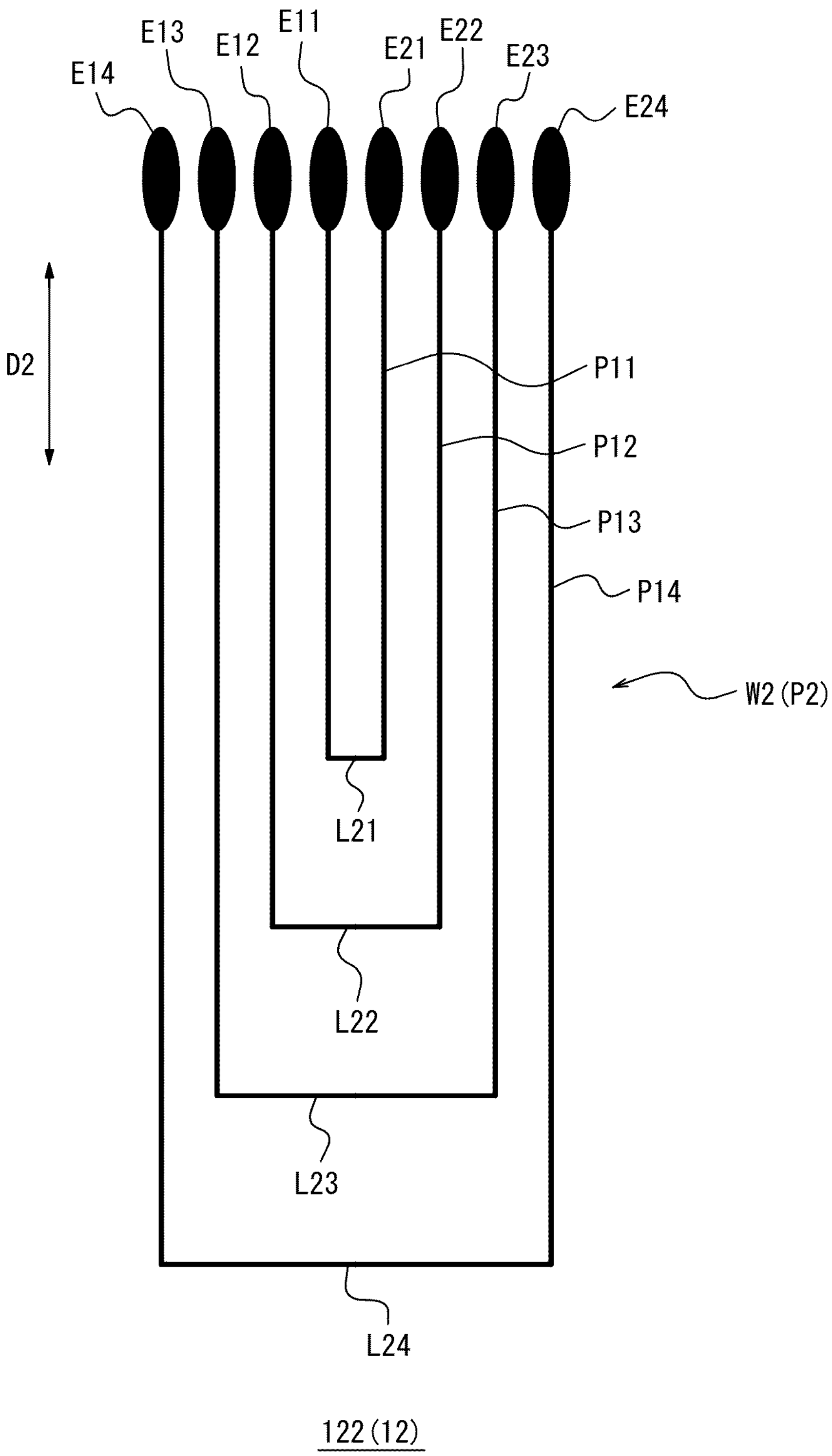
E14
E13
E12
E11
E21
E22
E23
E24
D2
P11
P12
P13
P14
W2 (P2)
L21
L22
L23
L24
122 (12)

FIG. 6A

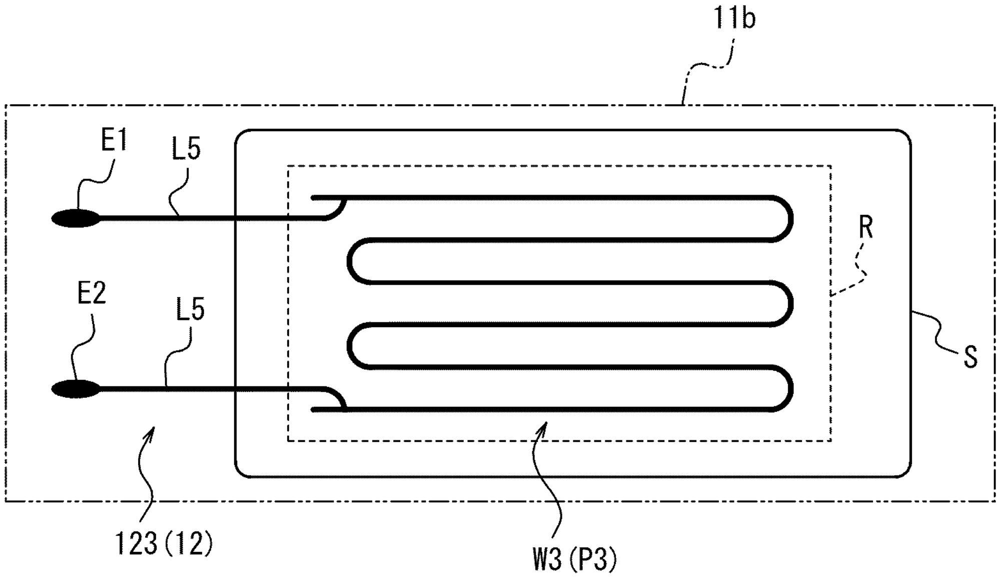


FIG. 6B

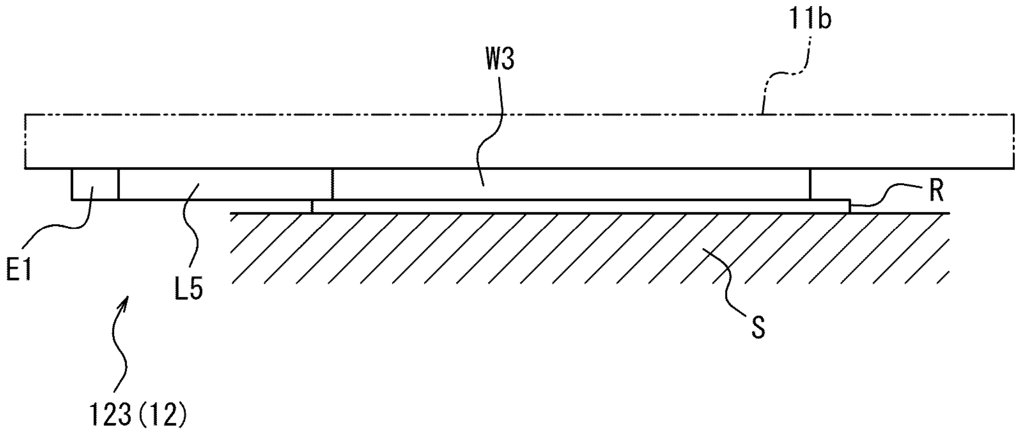

FIG. 7

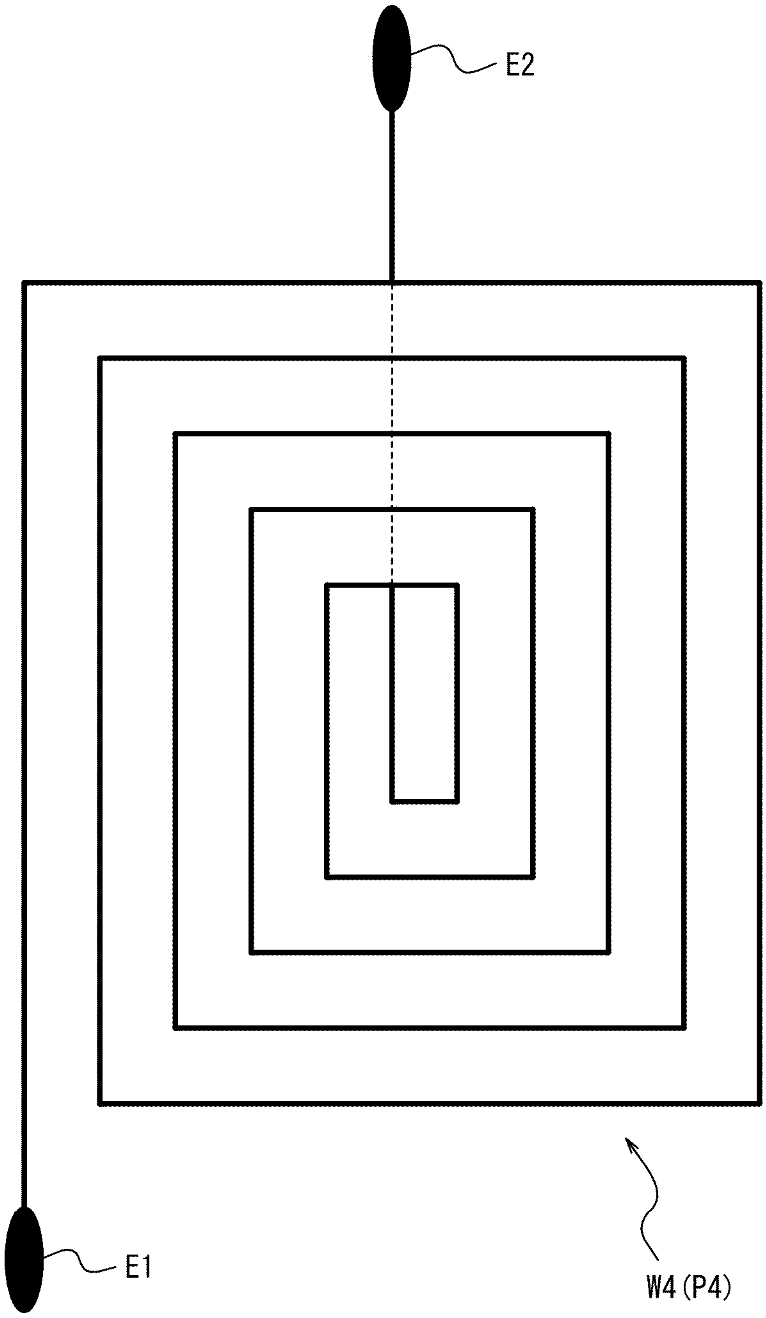


124(12)

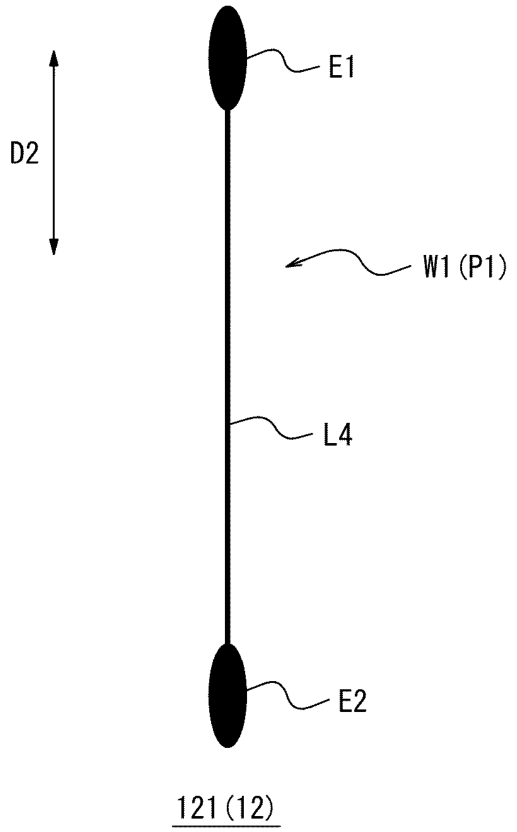
E1
D2
W1 (P1)
L4
E2
121 (12)

FIG. 8

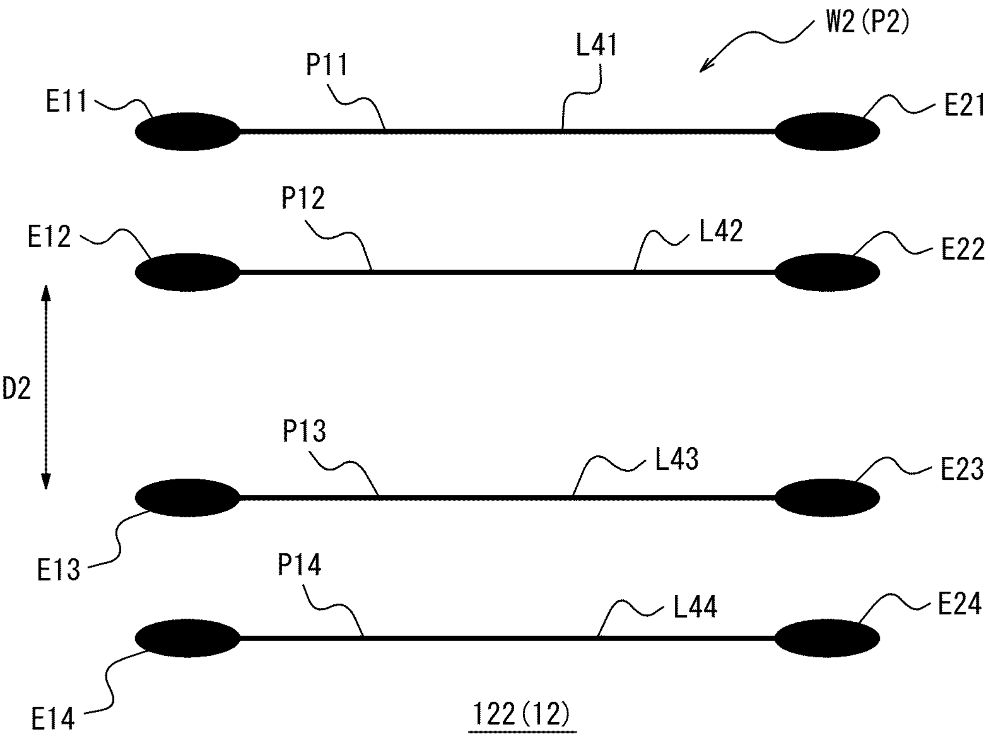
W2 (P2)
L41
P11
E11
E21
P12
E12
L42
E22
D2
P13
L43
E23
E13
P14
L44
E24
E14
122 (12)

FIG. 9

FIG. 10

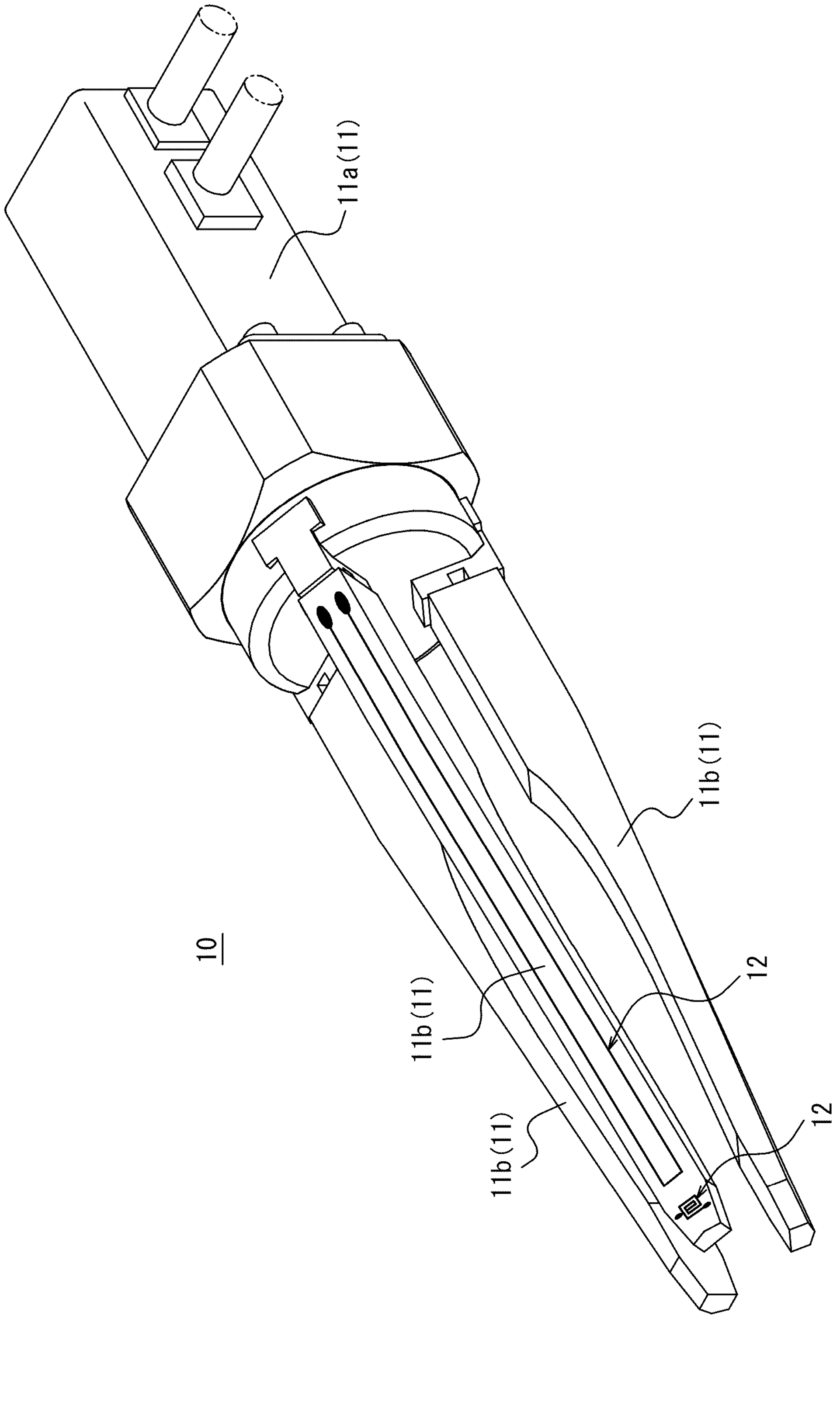

## INTERNATIONAL SEARCH REPORT

International application No. **PCT/JP2023/045545**

**A. CLASSIFICATION OF SUBJECT MATTER**

***B25J 15/08***(2006.01)i; ***B25J 19/00***(2006.01)i; ***B25J 19/06***(2006.01)i; ***C08K 3/22***(2006.01)i; ***C08L 81/02***(2006.01)i
FI: B25J15/08 T; B25J19/00 F; C08L81/02; C08K3/22; B25J15/08 U; B25J15/08 W; B25J19/06

According to International Patent Classification (IPC) or to both national classification and IPC

**B. FIELDS SEARCHED**

Minimum documentation searched (classification system followed by classification symbols)

B25J15/08; B25J19/00; B25J19/06; C08K3/22; C08L81/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2005-349492 A (SHARP KABUSHIKI KAISHA) 22 December 2005 (2005-12-22) paragraphs [0033]-[0056], [0062], [0076], fig. 1-5, 11 | 1, 11-12 |
| Y | | 2-10, 13-17 |
| Y | JP 2018-163047 A (UNIV RYUKOKU) 18 October 2018 (2018-10-18) paragraphs [0015], [0021]-[0022], fig. 1-3 | 2-10, 13-17 |
| Y | JP 2021-6359 A (DMG MORI SEIKI CO., LTD.) 21 January 2021 (2021-01-21) paragraphs [0041]-[0042], fig. 3 | 10 |
| Y | JP 2020-23045 A (TORAY INDUSTRIES, INC.) 13 February 2020 (2020-02-13) paragraphs [0012]-[0019] | 13-15 |
| Y | JP 1-110561 A (CALP CORP.) 27 April 1989 (1989-04-27) p. 2, upper left column, line 8 to upper right column, line 8 | 16 |
| A | JP 2018-185346 A (MINEBEAMITSUMI INC.) 22 November 2018 (2018-11-22) entire text, all drawings | 1-17 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 January 2024** | **13 February 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**
**Information on patent family members**

International application No.
**PCT/JP2023/045545**

| Patent document cited in search report | Publication date (day/month/year) | Patent family member(s) | Publication date (day/month/year) |
|---|---|---|---|
| JP 2005-349492 A | 22 December 2005 | (Family: none) | |
| JP 2018-163047 A | 18 October 2018 | (Family: none) | |
| JP 2021-6359 A | 21 January 2021 | (Family: none) | |
| JP 2020-23045 A | 13 February 2020 | (Family: none) | |
| JP 1-110561 A | 27 April 1989 | (Family: none) | |
| JP 2018-185346 A | 22 November 2018 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023008380 A
- JP 2022184009 A